# EUROPÄISCHE PATENTANMELDUNG

(11) **EP 1 701 077 A2**
(43) Veröffentlichungstag der Anmeldung: **13.09.2006**
(21) Anmeldenummer: 06003471.7
(22) Anmeldetag: 21.02.2006
(51) Int. Cl.: F16L 5/14, H02G 15/013

(54) **Vorrichtung zum flüssigkeits- oder gasdichten gegenseitigen Abgrenzen zweier Räume**

(30) Priorität: 11.03.2005 DE 102005011286
(71) Anmelder: Hauff-Technik GmbH & Co. KG, 89542 Herbrechtingen (DE)
(72) Erfinder: Heck, Martin, 89447 Zöschingen (DE); Kurz, Ralf, 89537 Giengen (DE)
(74) Vertreter: Dr. Weitzel & Partner

(57) **Zusammenfassung**

Die Erfindung betrifft eine Vorrichtung zum Durchführen von Medienleitungen (Gas, Wasser, Strom) durch die Öffnung einer Wand.

Gemäß der vorliegenden Erfindung ist die Vorrichtung zum Durchführen von Medienleitungen mit den folgenden Merkmalen ausgestattet:
- der Rahmen (2) ist durch Stege (2.2) in Segmente unterteilt;
- in jedes Segment ist eine Quetschdichtung (3) einsetzbar, die das Segment ausfüllt;
- jede Quetschdichtung (3) umfasst zwei Klemmplatten (3.3,3.4) sowie einen zwischen diesen eingespannten Dichtkörper (3.5,3.6,3.7) aus elastischem oder nachgiebigem Material;
- jede Quetschdichtung (3) weist ein Spannelement (3.1) zum Zusammenspannen der Quetschdichtung (3) auf.

## Beschreibung

Die Erfindung betrifft eine Dichtungsvorrichtung, mit welcher zwei Räume gegeneinander abgetrennt oder abgegrenzt werden können.

Solche Vorrichtungen werden bei sogenannten Hauseinführungskombinationen angewandt. Diese werden dann eingesetzt, wenn eine Leitung durch eine Wand hindurchgeführt wird. Die Wand ist beispielsweise die Außenwand eines Hauses. Der eine der beiden Räume ist dann ein Innenraum des Hauses, und der andere Raum ist die äußere Umgebung. Die Wand weist eine Bohrung auf, die gegenüber dem Querschnitt der Leitung Übermaß hat, so dass zwischen der Leitung und der Laibung der Bohrung ein Ringraum verbleibt. Der Ringraum muss ausgefüllt werden, da er sonst eine leitende Verbindung zwischen den beiden Räumen darstellen würde, was unerwünscht ist. Der Ringraum wird ausgefüllt mit einem elastischen Körper, beispielsweise mit einem Ringkörper aus Gummi. Der Ringkörper aus Gummi umschließt die Leitung und liegt seinerseits selbst mit seiner äußeren Mantelfläche an der Laibung der Bohrung an. Durch axiales Stauchen wird der Gummi-Ringkörper an die Laibung der Bohrung angepresst.

Bekannte Hauseinführungskombinationen umfassen eine Quetschdichtung zum Einsatz in eine kreisrunde Bohrung in der Wand eines Gebäudes. Die Quetschdichtung ist ebenfalls kreisrund, so dass sie in die genannte Bohrung passt. Die Quetschdichtung umfasst eine gummielastische Platte sowie zwei Spannplatten, die die gummielastische Platte sandwichartig zwischen sich einschließen. Diese drei Platten sind durch wenigstens eine Schraube miteinander verspannt. Die Quetschdichtung weist im allgemeinen mehrere Bohrungen auf, deren jede mit einer Leitung belegbar ist - Gasleitung, Stromleitung und so weiter. Zum dichten Montieren der Quetschdichtung in der Bohrung der Wand wird die Schraube beziehungsweise werden die Schrauben angezogen. Die gummielastische Platte wird hierdurch in axialer Richtung gestaucht und dehnt sich in radialer Richtung aus. Dies führt einerseits zu einem satten und dichten Anliegen des gummielastischen Materiales an den Leitungen, und andererseits an der Laibung der Wandbohrung.

Es kann öfter notwendig sein, andere Leitungen durch eine Wandöffnung hindurchzuführen, beispielsweise Leitungen anderer Durchmesser, oder Leitungen, die andere Medien führen, oder Leitungen in anderer Anzahl, als zuvor. In diesem Falle muss auch die Quetschdichtung komplett ausgetauscht werden gegen eine neue Quetschdichtung, die nach Anzahl und Durchmesser ihrer Bohrungen den neuen Leitungen entspricht. Dies ist aufwendig. Die alte Quetschdichtung muss aus der Wandbohrung entfernt werden. Die neue Quetschdichtung muss hergestellt und in die Wand eingesetzt werden.

DE 298 13 58 U1 beschreibt eine Vorrichtung zum Durchführen von Medienleitungen durch die Öffnungen einer Wand. In der Öffnung ist ein Halte-und Dichtungselement angeordnet, das aus einem zentralen Elastomerkörper und zwei Deckeln besteht. Der Elastomerkörper weist Bohrungen für jeweils eine Leitung auf und ist durch Druck auf die Deckel stauchbar, so dass die Leitungen dichtend eingeklemmt werden.

DE 100 20 293 A1, CH 663 262 A5 und DE 299 24 372 U1 zeigen ähnliche Vorrichtungen.

Der Erfindung liegt die Aufgabe zugrunde, eine Vorrichtung zum Durchführen von Medienleitungen durch die Öffnung einer Wand derart zu gestalten, dass der Herstellungs- und Montageaufwand reduziert wird, der sich bei einer Neubelegung (Nachbelegung) ergibt.

Diese Aufgabe wird durch die Merkmale von Anspruch 1 gelöst.

Dem gemäß wird ein Rahmen vorgesehen, der sich in Achsrichtung wenigstens über einen Teil der Wandöffnung erstreckt. Der Rahmen ist durch Stege in Segmente unterteilt. Im allgemeinen wird der Rahmen einen Umfangsring aufweisen, dessen Außenmaß der Laibung der Wandöffnung entspricht und an den die äußeren Enden der Stege angeschlossen sind. Es wird ferner für jedes Segment eine in diese passende Quetschdichtung vorgesehen, die in das Segment eingesetzt wird. Die einzelne Quetschdichtung ist somit nicht kreisrund, wie beim Stande der Technik, sondern segmentförmig. Im übrigen umfasst sie aber in bekannter Weise einen Dichtkörper aus elastischem oder nachgiebigem Material sowie zwei Klemmplatten, die den Dichtkörper sandwichartig zwischen sich einschließen, natürlich auch eine Spannschraube zum Verspannen der segmentförmigen Quetschdichtung.

### Eine solche Vorrichtung hat die folgenden Vorteile:

Soll die Belegung der Vorrichtung mit Leitungen verändert werden, so betrifft diese Änderung im allgemeinen nicht sämtliche Leitungen. Häufig kommt es vor, dass man nur eine Leitung gegen eine andere austauscht, oder dass man zwei oder drei neue Leitungen einzieht, oder dass man eine oder zwei Leitungen weglässt. Hat man gemäß der Erfindung mehrere segmentförmige Quetschdichtungen statt nur einer einzigen, so brauchen nur jene Segmente herausgenommen zu werden, bei welchen sich bezüglich der betreffenden Leitungen Änderungen ergeben, während man die übrigen segmentförmigen Quetschdichtungen im Rahmen lässt. Diese erfüllen dann weiterhin ihre Dichtfunktion. Die herausgenommenen segmentförmigen Quetschdichtungen werden sodann durch andere ersetzt, die den neuen Gegebenheiten entsprechen. Eine neue segmentförmige Quetschdichtung kann für Leitungen größeren oder kleineren Durchmessers gestaltet sein und dem gemäß Bohrungen größerer oder kleinerer lichter Weiten haben, oder eine andere Anzahl von Bohrungen aufweisen, oder völlig geschlossen sein. Der Montageaufwand wird damit geringer. Dies ergibt sich auch daraus, dass die segmentförmigen Dichtplatten kleiner sind, als eine einzige große Quetschdichtung, und dass man dem gemäß pro segmentförmiger Quetschdichtung im allgemeinen mit einer einzigen, möglichst zentral angeordneten Spannschraube auskommt, statt mehrerer Spannschrauben bei einer einzigen, kreisförmigen großen Quetschdichtung.

Ein wichtiger Vorteil ist die Rationalisierung der Fertigung. Dies ergibt sich daraus, dass wenigstens einige der erfindungsgemäßen segmentförmigen Quetschdichtungen baugleich sein können. Dies trifft besonders dann zu, wenn die Quetschdichtungen die Gestalt von gleich großen Kreissegmenten haben. In diesem Falle sind die Stege des Rahmens radial angeordnet.

Durch einen solchen modularen Aufbau können Quetschdichtungen in großer Stückzahl auf Vorrat hergestellt werden, jeweils eingeschlossen die segmentförmigen Klemmplatten sowie die segmentförmigen Dichtkörper. Dabei werden segmentförmige Quetschdichtungen mit Bohrmustern hergestellt, die bezüglich der Bohrdurchmesser und des Bohrmusters in der Praxis häufig vorkommen. Es können natürlich auch Quetschdichtungen oder Teile hiervon als Halbfertigfabrikate ohne jegliche Bohrungen vorgefertigt und auf Lager gelegt werden.

Die Erfindung ist anhand der Zeichnung näher erläutert. Darin ist im einzelnen folgendes dargestellt:
- Figur 1: zeigt eine Wanddurchführung.
- Figur 2: zeigt einen erfindungsgemäßen Rahmen.
- Figur 3: zeigt kreissegmentförmige Quetschdichtungen zum Einsetzen in den Rahmen gemäß Figur 2.
- Figur 4: zeigt die Wanddurchführung gemäß Figur 1 mit darin eingesetztem Rahmen gemäß Figur 2.
- Figur 5: zeigt einen Rahmen mit darin eingesetzten kreissegmentförmigen Quetschdichtungen.
- Figur 6: zeigt einen Rahmen mit darin eingesetzten rechteckigen Quetschdichtungen.
- Figur 7: zeigt einen Rahmen mit darin eingesetzten Quetschdichtungen im Querschnitt.
- Figur 8: zeigt einen weiteren Rahmen mit darin eingesetzten Quetschdichtungen im Querschnitt.

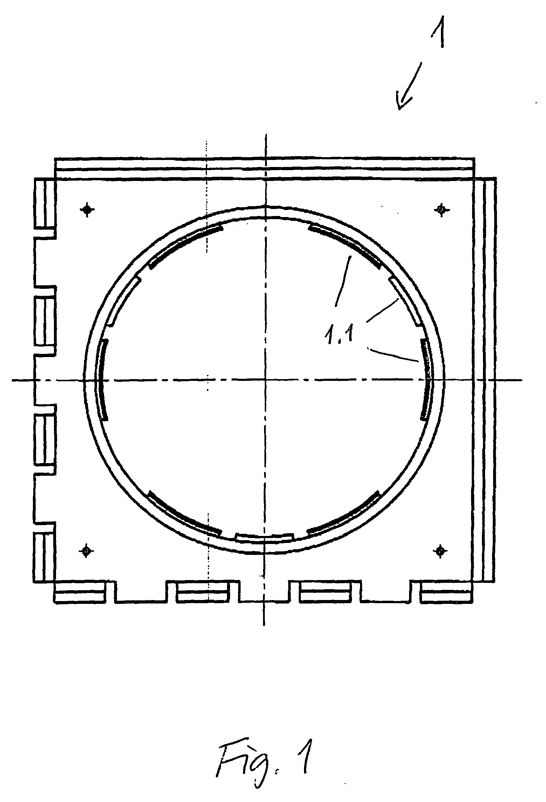

Die in Figur 1 gezeigte Wanddurchführung 1 wird auf eine hier nicht gezeigte Wand aufgesetzt und durch Schrauben oder dergleichen hieran fixiert. Die Wanddurchführung 1 weist eine Öffnung auf, die gleich groß ist, wie die Wandöffnung, in welche die genannte Quetschdichtung eingesetzt wird. Die Wanddurchführung besteht im allgemeinen aus Hartplastik. Sie kann einteilig sein mit einer Hülse, deren lichte Weite wiederum der lichten Weite der Wandöffnung entspricht, und die durch die Wandöffnung hindurchgeführt ist.

Die Wanddurchführung weist eine Reihe von Klauen 1.1 auf, deren Bedeutung noch erläutert werden soll.

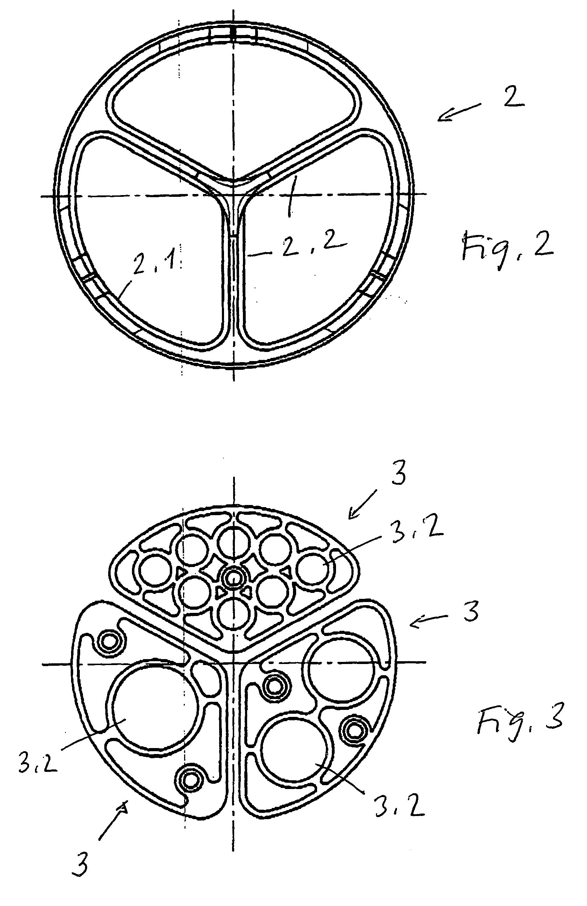

Der in Figur 2 gezeigte erfindungsgemäße Rahmen weist einen Umfangsring 2.1 auf, ferner drei Stege 2.2. Der Umfangsrichtung 2.1 und die Stege 2.2 bilden gemeinsam drei kreissegmentförmige Hohlräume. Der Rahmen 2 kann ebenfalls aus Kunststoff bestehen, aber auch aus anderen Materialien, zum Beispiel aus Metall.

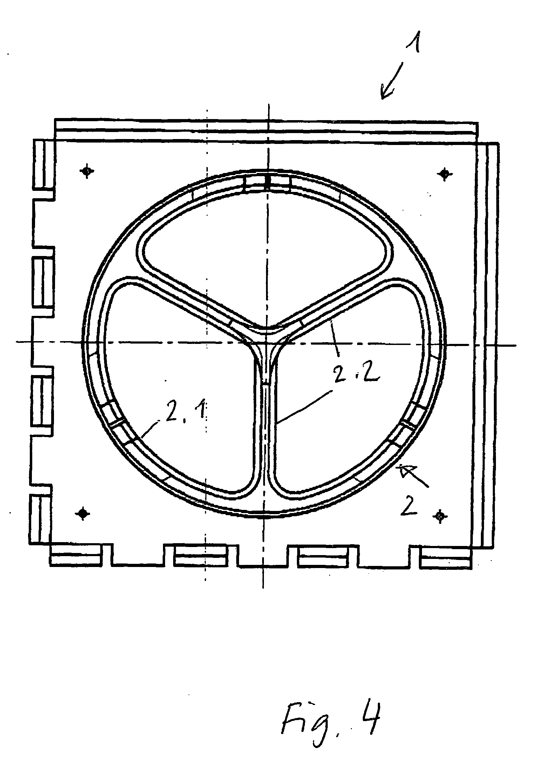

Figur 3 zeigt drei kreissegmentförmige Quetschdichtungen. Deren Außenkontur ist derart bemessen, dass sie in die kreissegmentförmigen Aussparungen des Rahmens gemäß Figur 2 passen. Jede Quetschdichtung ist wie folgt aufgebaut - senkrecht zur Zeichenebene gesehen: Es ist jeweils ein Dichtkörper zwischen zwei Klemmplatten sandwichartig eingespannt. Zum Einspannen dienen Spannschrauben 3.1. Sind die Quetschdichtungen 3 in die segmentartigen Aussparungen des Rahmens 2 eingesetzt, so werden die Spannschrauben 3.1 angezogen. Der Dichtkörper aus nachgiebigem oder elastischem Material, beispielsweise aus einem Gel, wird hierdurch in axialer Richtung gestaucht und dehnt sich dem gemäß in radialer Richtung aus. Auf diese Weise wird die betreffende Quetschdichtung im Rahmen 2 fixiert. Der Rahmen 2 kann seinerseits mechanisch mit der Wanddurchführung 1 verriegelt werden. Hierzu dienen die genannten Klauen 1.1 der Wanddurchführung. Das Fixieren erfolgt durch Verdrehen des Rahmens 2 mit darin eingesetzten Quetschdichtungen 3.

Stattdessen ist es aber auch möglich, den Umfangsring 2.1 des Rahmens 2 mit Aussparungen zu versehen, beispielsweise mit Langlöchern oder mit Kreisbohrungen, durch welche das Material des Dichtkörpers beim Anziehen der Spannschrauben radial nach außen verdrängt wird und damit an der Laibung der Wand oder an der Laibung der genannten, mit der Wanddurchführung 1 verbundenen Hülse satt an. Auch kann der Umfangsring 2.1 ganz oder teilweise entfallen, so dass die Quetschdichtungen mit ihren äußeren Umfangsflächen unmittelbar an der Laibung der Wandöffnung oder an der Laibung der Hülse anliegen.

Wie man sieht, haben die Quetschdichtungen 3 eine höchst unterschiedliche Konfiguration. Das einzige, was zwischen den einzelnen Quetschdichtungen übereinstimmt, ist die Außenkontur. Diese ist bei allen drei Quetschdichtungen identisch. Unterschiedlich ist das Bohrmuster - siehe die Bohrungen 3.2. Diese sind bezüglich ihrer Durchmesser und ihrer Anzahl von Quetschdichtung zu Quetschdichtung verschieden.

In Figur 4 erkennt man wiederum die Wanddurchführung 1 mit dem darin eingesetzten Rahmen 2. Die Verriegelung zwischen diesen beiden Elementen erfolgt mit Hilfe der genannten Klauen 1.1 nach Art eines Bajonettverschlusses.

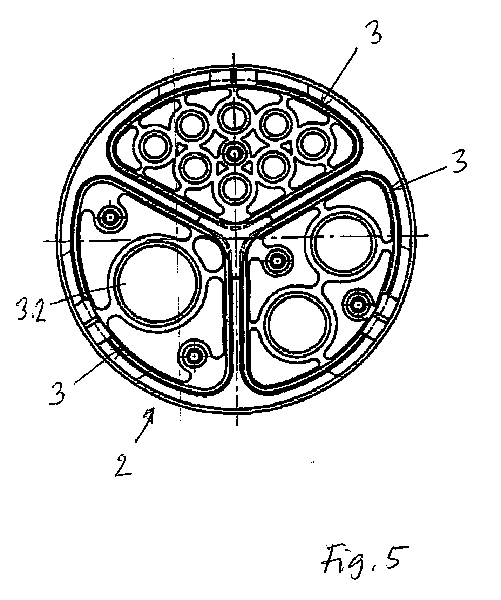

In Figur 5 ist der Rahmen 2 mit darin eingesetzten Quetschdichtungen 3 gezeigt. Diese Bauteile müssen noch in die Wanddurchführung 1.1 eingesetzt werden. Hier kann wiederum auf zweierlei Weise vorgegangen werden, wie oben erwähnt:
Zum einen kann die Verriegelung zwischen Rahmen 2 und Wanddurchführung 1 formschlüssig erfolgen, beispielsweise nach Art eines Bajonettverschlusses mit den genannten Klauen 1.1.

Zum anderen könnte auch der Rahmen 2 einen Umfangsring 2.1 mit Durchbrechungen aufweisen, durch welche Material der Dichtkörper radial nach außen treten und sich beim Anziehen der Spannschrauben 3.1 gegen die Laibung der Hülse der Wanddurchführung 1 oder gegen die Laibung der Wandöffnung andrückt. Dies wäre eine kraftschlüssige Verbindung.

Im erstgenannten Falle werden die Spannschrauben 3.1 nach dem Einsetzen der Quetschdichtungen 3 in den Rahmen 2 angezogen. Im zweiten Falle werden sie erst dann angezogen, nachdem der Rahmen 2 mit den darin eingesetzten Quetschdichtungen 3 in die Öffnung der Wanddurchführung 1 eingesetzt ist.

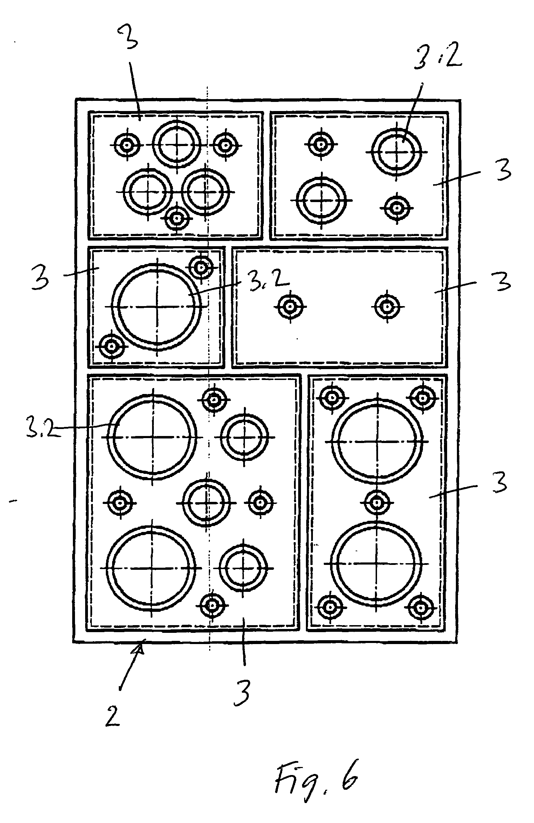

Bei der Ausführungsform gemäß Figur 6 sind die Quetschdichtungen 3 rechteckig beziehungsweise quadratisch. Alle Quetschdichtungen bis auf eine sind mit Bohrungen 3.2 versehen. Eine der rechteckigen Packungen 3 weist keine Bohrungen auf. Sie ist somit geschlossen und dient somit dazu, die von ihr eingenommene Fläche abzusperren. Alle Quetschdichtungen 3 sind wiederum mit Spannschrauben 3.1 versehen.

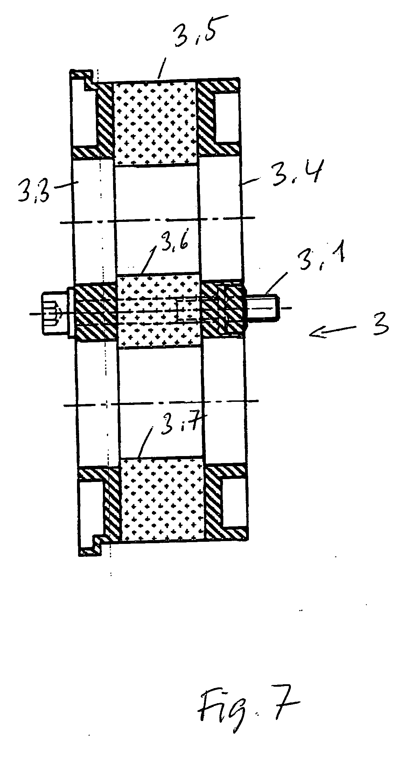

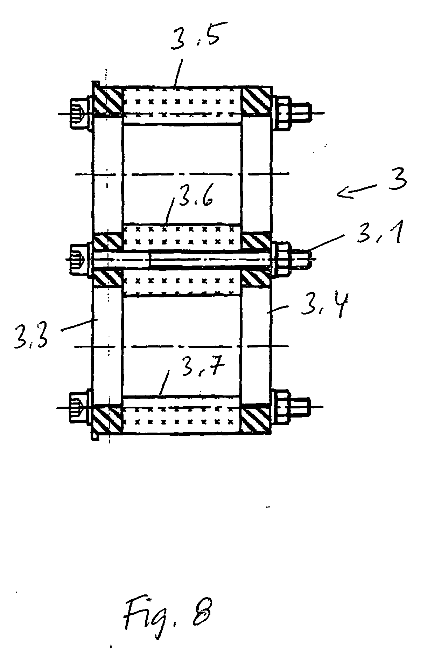

Die Figuren 7 und 8 sind jeweils Schnittansichten, gelegt in einer Schnittebene parallel zur Längsachse der Wandöffnung - hier nicht gezeigt. Man erkennt jeweils zwei Klemmplatten 3.3, 3.4 sowie Dichtkörper 3.5, 3.6 und 3.7.

Es kann zweckmäßig sein, als Dichtkörper ein Gel zu verwenden, das wenigstens auf einer seiner Seitenflächen mit einer Haut versehen ist. Die Haut kann eine geleigene Haut sein, erzeugt durch mechanische oder chemische oder thermische Behandlung der betreffenden Seitenfläche. Die Haut kann aber auch eine aufgelegte Folie sein. Die Folie kann mit dem übrigen Gel-Dichtkörper fest verbunden sein.

Der Zweck der Haut besteht in folgendem: Wird durch einen geschlossenen Gelkörper ein stabförmiger Körper hindurchgestoßen, beispielsweise ein Kabel oder ein elektrischer Leiter, so schleppt dieser stabförmige Körper Material mit, was unerwünscht ist. Die genannte Haut verhindert sein solches Mitschleppen.

### Übersicht der Bezugszeichen

- 1: Wanddurchführung
- 1.1: Klauen
- 2: Rahmen
- 2.1: Umfangsring
- 2.2: Stege
- 3: Quetschdichtung
- 3.1: Spannschrauben
- 3.2: Bohrungen
- 3.3: Klemmplatte
- 3.4: Klemmplatte
- 3.5: Dichtkörper
- 3.6: Dichtkörper
- 3.7: Dichtkörper

## Patentansprüche

1. Vorrichtung zum Durchführen von Medienleitungen (Gas, Wasser, Strom) durch die Öffnung einer Wand; .
1.1 der Rahmen (2) ist durch Stege (2.2) in Segmente unterteilt;
1.2 in jedes Segment ist eine Quetschdichtung (3) einsetzbar, die das Segment ausfüllt;
1.3 jede Quetschdichtung (3) umfasst zwei Klemmplatten (3.3, 3.4) sowie einen zwischen diesen eingespannten Dichtkörper (3.5, 3.6, 3.7) aus elastischem oder nachgiebigem Material;
1.4 jede Quetschdichtung (3) weist ein Spannelement (3.1) zum Zusammenspannen der Quetschdichtung (3) auf.

2. Vorrichtung nach Anspruch 1, **dadurch gekennzeichnet, dass** der Rahmen (2) einen Umfangsring (2.1) aufweist.

3. Vorrichtung nach einem der Ansprüche 1 oder 2, **dadurch gekennzeichnet, dass** der Rahmen kreisförmig ist, und dass die Stege radial verlaufen.

4. Vorrichtung nach Anspruch 1 bis 3, **dadurch gekennzeichnet, dass** der Dichtkörper (3.5, 3.6, 3.7) aus einem Gel oder aus Silikon oder einem anderen Elastomer besteht.

5. Vorrichtung nach Anspruch 4, **dadurch gekennzeichnet, dass** das Gel auf wenigstens einer seiner Seitenflächen eine Haut aufweist.

6. Vorrichtung nach Anspruch 5, **dadurch gekennzeichnet, dass** die Haut eine geleigene Haut oder eine Folie aus einem anderen Material ist.

7. Vorrichtung nach einem der Ansprüche 1 bis 6, **dadurch gekennzeichnet, dass** der Rahmen (2) auf seinem Umfangsbereich Mittel zum Einrasten in einen den Rahmen (2) aufnehmenden Körper (1) aufweist.

8. Vorrichtung nach einem der Ansprüche 1 bis 7, **dadurch gekennzeichnet, dass** jede Quetschdichtung (3) ein einziges Spannelement (3.1) aufweist, das im Flächenmittelpunkt oder nahe dem Flächenmittelpunkt des Segmentes angeordnet ist.
